Europäisches Patentamt

European Patent Office

Office européen des brevets

(11) Publication number: **0 077 661**
A2

## EUROPEAN PATENT APPLICATION

(21) Application number: 82305501.7

(22) Date of filing: 15.10.82

(51) Int. Cl.³: **B 29 D 7/24**
**B 29 F 3/08**

(30) Priority: 16.10.81 JP 164265/81

(43) Date of publication of application:
27.04.83 Bulletin 83/17

(84) Designated Contracting States:
BE DE FR GB IT NL SE

(71) Applicant: NIPPON UNICAR COMPANY LIMITED
Asahi-Tokai Building 6-1 Ohtemachi 2-Chome
Chiyoda-ku Tokyo 100(JP)

(72) Inventor: Fugitani, Shiego
946-6, Hirato-Cho Totsuka-Ku
Yokohama-Shi Kemegawa-Ken(JP)

(72) Inventor: Matsuda, Youichi
2-37-2, Fuijigaoka Midoriku
Yokohama-Shi Kenegawa-Ken(JP)

(74) Representative: Baverstock, Michael George
Douglas et al,
BOULT, WADE & TENNANT 27 Furnival Street
London, EC4A 1PQ(GB)

(54) Process and apparatus for forming a plastics film.

(57) A process for forming tubular film by permitting a molten tubular film to expand by cooling it rapidly by blowing cooling air perpendicular to the axis of the tubular film and then cooling with secondary cooling air.

## PROCESS AND APPARATUS FOR
## FORMING A PLASTICS FILM

This invention relates to a blown film extrusion process and apparatus for forming a tubular thermoplastic film and more particularly to a process and apparatus for forming tubular thermoplastic film having a high degree of clarity.

Recent improvements in blown film extrusion techniques are directed primarily toward high speed production. For example, Japanese Utility Model Publication No. 52-12791, Japanese Utility Model Laid-open No. 49-117358, and Japanese Patent Publication Nos. 53-8339 and 54-8390 disclose parallel air flow systems in which cooling air is blown in the direction in which the tubular film travels. These references disclose that the laminar air flow has the effects of (1) keeping the tubular film stable, (2) helping the tubular film to expand, and (3) increasing cooling efficiency. However, these references are aimed solely at high-speed production and improved productivity. They differ from the present invention in that the present invention is directed towards improvements in clarity of the film. In many cases, productivity and clarity conflict with each other. For instance, in high-speed production, it is necessary to bring the frost line near the die. On the other hand, for the improvement of clarity, it is desirable to

- 2 -

extend the distance from the die to the frost line so that it takes a longer time for the tubular film to travel before solidification. To accomplish this, in the process of this invention, the tubular film is kept heated or cooled slowly in an annealing chamber while it travels from the die to the air ring. As a result of the process, the molten, flowable extrudate becomes smooth due to its surface tension while it travels and becomes thin due to the difference of extrusion speed and take-up speed.

The use of an annealing chamber in film production is disclosed in Japanese Patent Publication No. 38-24593. However, experimental data in that patent suggests that low density polyethylene films produced by the use of an annealing chamber have the same level of clarity as films now available on the market. In other words, the improvement in clarity is far from the level aimed at by the present invention. In addition, the annealing chamber described in the patent has never been put into practical use because it results in unstable operation. This instability is caused by the fact that the annealing chamber produces therein an atmosphere of reduced pressure, permitting the tubular film to expand and, in an extreme case, to come into contact with the inside wall of the annealing chamber.

To eliminate this problem, there is proposed in Japanese Utility Model Publication No. 46-28952 an annealing chamber with openings that allow air to pass. There is also proposed in Japanese Patent Publication No. 53-8339 and Japanese Utility Model Publication No. 52-12791 a perforated internal cylinder placed adjacent to the die.

The present invention, however, differs from these references in that cooling air from an air ring is blown perpendicularly to the axis of the tubular film so that the film is cooled more rapidly than with the parallel flow type. In addition, a small portion of the cooling air enters the annealing chamber to replace slowly the air therein, keeping the annealing chamber slightly pressurized or at least preventing the annealing chamber from being evacuated. This arrangement permits the tubular film to pass stably through the annealing chamber while being kept heated or cooled slowly.

At present, the annealing chamber has been known to contribute to the smoothness of the film, and blowing the cooling air perpendicularly to the film is expected to increase the cooling efficiency. However, neither of these teachings have been put into practical use because of the unstable operation resulting from their use. No one has ever conceived of using them in combination. The combination of them, however, has been found to improve film clarity and gloss because of the enhanced cooling effect. According to the method and apparatus of the present invention, the annealing chamber stabilizes the tubular film and the accurately fabricated air ring in combination with the air-flow rectifying cylinder and the baffle also stabilizes the tubular film.

According to the present invention, there is provided an improvement in the process of forming a blown film by melt-extruding a thermoplastic resin and subsequently expanding and cooling the molten tubular film formed from the extrudate, the improvement which comprises directing said molten tubular film into annealing chamber wherein said molten tubular film is kept heated or cooled slowly, discharging said molten film from said annealing chamber and thereafter permitting said molten tubular film to expand while cooling it rapidly and uniformly by blowing cooling air perpendicularly to the axis of said tubular film from an air ring, continuing cooling said tubular film by passing secondary cooling air taken from the bottom of an air-flow rectifying cylinder, and finally cooling completely and solidifying said tubular film by permitting cooling air to discharge from the opening between the air-flow rectifying cylinder and an air baffle and from an opening between said tubular film and said air baffle.

The present invention also provides an apparatus for forming a blown tubular film by extruding a thermoplastic resin from a circular die, cooling with air from an air ring, and expanding the extrudate with internal pressure, said apparatus comprising an annealing chamber installed between, and in contact with said die and said air ring and around said tubular film, and air ring for blowing cooling air perpendicularly to the axis of said tubular film, an air-flow rectifying cylinder installed coaxially with and outside said tubular film, and a baffle installed above said air-flow rectifying cylinder, said air ring and said cylinder forming between them an inlet for secondary cooling air, said cylinder and said baffle forming between them a secondary outlet for cooling air and said tubular film and said baffle forming between them an outlet for cooling air.

The invention is illustrated in the accompanying drawings, in which:

Fig. 1. is a schematic cross-sectional view showing the apparatus used in the Examples of the present invention.

Fig. 1a is a view looking downward at the baffle illustrated in Fig. 1.

Fig. 2. is a schematic cross-sectional view showing the apparatus used in Comparative Example 1.

Fig. 2a is a view looking downward at the baffle illustrated in Fig. 2.

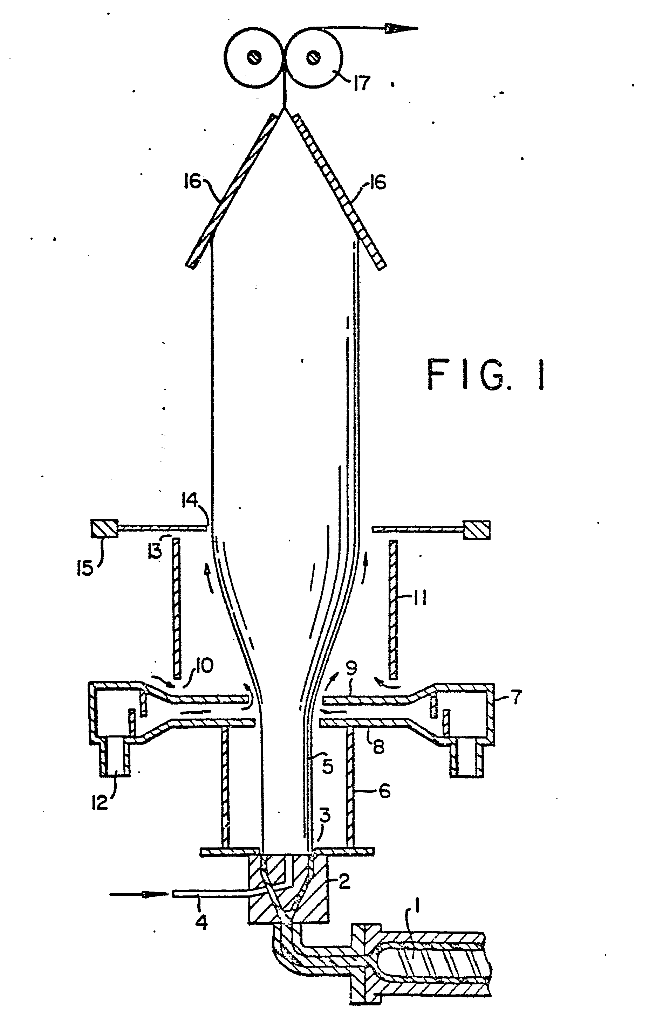

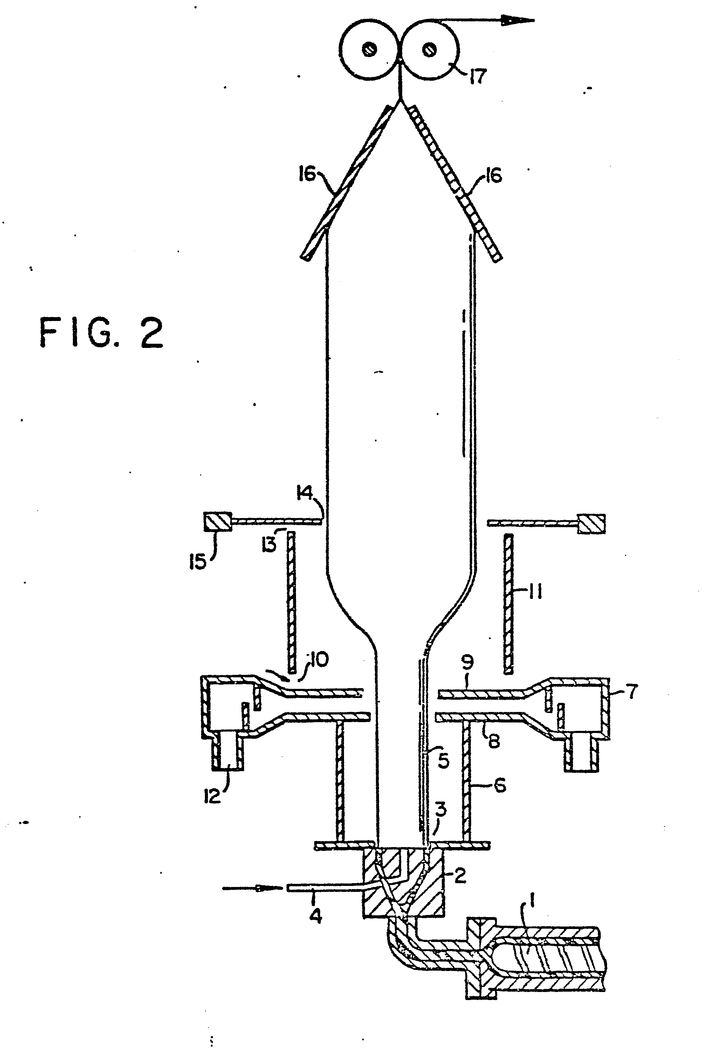

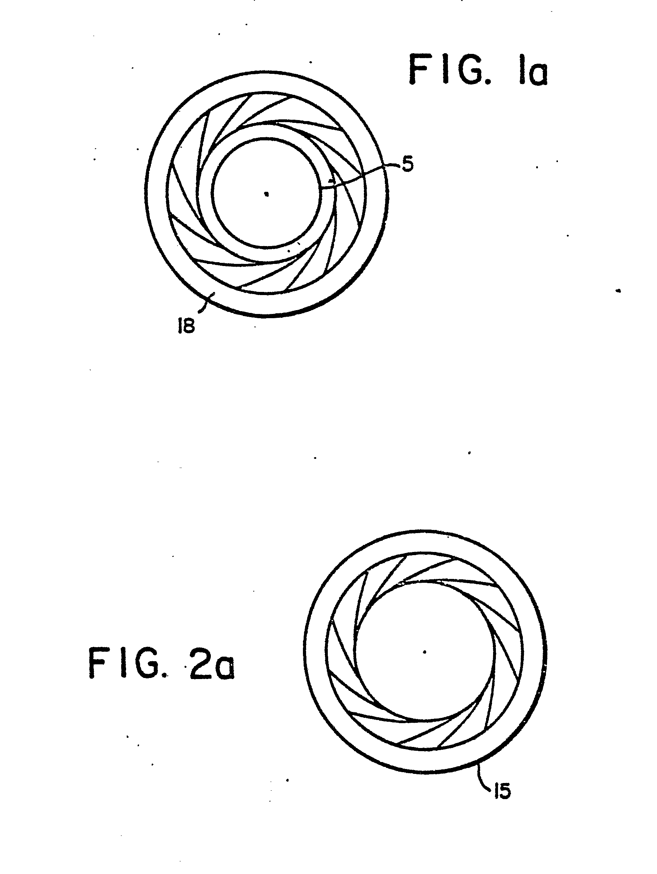

Referring to the drawing and specifically Fig. 1, a resin which has been melted and kneaded by an extruder (1) is formed into a tube by a circular die (2). While passing through an annealing chamber (6), the molten resin is either kept heated, or cooled very slowly, so that the resin is kept at a temperature much higher than its solidification point and crystallization point. In this step after emergence from the die the molten tubular film is improved in surface smoothness. The tubular film is then cooled rapidly by cooling air blown toward the axis of the tubular film (5) and perpendicularly to the film surface, from an air ring (7) positioned adjacent to the annealing chamber. Since the cooling air is blown perpendicular to the film surface, part of the cooling air enters the annealing chamber, contributing to the prevention of pressure reduction in the chamber. The tubular film is expanded by the internal pressure of air introduced into the tubular film through the air inlet (4), cooled effectively in an air-flow rectifying cylinder (11), made flat by a collapsing frame (16), and finally wound up through nip rolls (17). The air-flow rectifying cylinder (hereinafter referred to simply as cylinder) is so arranged as to form a gap or opening between the bottom end of the cylinder and the top plate (9) of the air ring, so that secondary cooling air is sucked in therefrom for increased cooling capacity. The cylinder is also arranged so as to form a secondary discharge port (13) for cooling air between the upper end of the cylinder and the baffle (15), so that the cooling air is partly discharged therefrom. This arrangement prevents undesirable turbulence from occurring around the tubular film. The baffle (15) can have an iris diaphragm structure, which makes the inside diameter variable, so that the opening of the baffle can be changed according to the size of the tubular film being made.

The annealing chamber (6), usually 150 to 700 mm high and 1.1 to 5 times as large in diameter as the die lip diameter, is installed coaxially with the tubular film. The gap between the bottom end of the cylinder (11) and the top plate (9) of the air ring can be varied within the range of from 5 to 50 mm. The cylinder (11) can be 150 to 500 mm high and inside diameter of the cylinder can be 1.5 to 6.5 times the die lip diameter.

It is essential that the tubular film not come into contact with the cylinder. Moreover, it is necessary that the baffle, which is placed 5 to 50 mm above the top of the cylinder (11), be adjustable in the range of 5 to 100 mm for the gap between the internal periphery and the tubular film. Thus, it is desirable that the inside diameter be adjustable by means of an iris diaphragm and the like. The baffle should preferably have an outside diameter from 500 to 1000 mm which is greater than the outside diameter of the cylinder. If the gaps (13) and (14) are narrower than 5 mm, the cooling air does not discharge smoothly, with the result that a turbulence in the cylinder makes the bubble unstable. If the gaps (13) and (14) exceed 50 mm and 100 mm, respectively, the cooling effect reduces and the bubble becomes unstable. The components of the cylinder and baffle according to the present invention are expected to improve cooling effect and bubble stability of the resulting tubular film. To demonstrate this, experiments were carried out with the inlet for secondary cooling air closed and/or the discharge port for cooling air closed.

The Experiments are described below as Experiments 1-3.

Experiment 1

In this experiment, a tubular film was produced using an apparatus with both the inlet for secondary cooling air and the discharge port (13) for cooling air closed, so that the cylinder functions like a vacuum chamber. The bubble of tubular film swayed and wandered, causing the blow-up ratio to change considerably. As compared with Example 1, the fluctuation of lay-flat width was 3 to 5 times greater. The resulting film roll was irregular in appearance and no marketable bags could be made from such a film because of excessive size variation.

Experiment 2

This experiment was carried out with the discharge port for cooling air closed. The resulting film showed properties similar to those of the film obtained in Example 1. However, some problems were encountered in bubble stability, with the fluctuation of layflat width, irregular roll shape, and inability to be fabricated into marketable bags.

Experiment 3

In this experiment, a film was produced using the apparatus of the present invention, with the exception that the inlet for secondary cooling air was closed. Results were similar to those of Experiment 2. The film was acceptable in clarity, but the lack of bubble stability in blow up resulted in films of commercially low quality.

The following Examples and comparative Examples were performed to either demonstrate the present invention and/or to compare the present invention with conventional equipment.

Example 1

A tubular film was produced with a 40 mm extruder equipped with the apparatus of this invention as shown in Fig. 1, in which the circular die lip was 75mm in diameter and the annealing chamber was 200 mm high and 285 mm in inside diameter. The air-flow rectifying cylinder was placed over the air ring so as to form a gap that permits the secondary cooling air to enter. The volume of the secondary cooling air was equivalent to 1/15 of that of the primary cooling air from the air ring. In such an arrangement the primary and secondary cooling air combined together passes through the cylinder which is 300 mm in inside diameter, to cool the tubular film effectively, and discharges from two outlets - - one formed between the tubular film and the baffle and the other formed between the cylinder and the baffle. The cooling

- 9 -

air leaves the air ring lip at a velocity of 6.2
meters per second and at a temperature of 20°C. The
baffle is 900 mm in outside diameter and the inside
diameter was adjusted so that a 30 mm gap is formed
between the tubular film and the internal periphery
of the baffle. Other operating conditions were as
follows:

|                    |                                                                                  |
| ------------------ | -------------------------------------------------------------------------------- |
| Film take-up speed: | 12 m/min                                                                         |
| Film thickness:    | 0.04 mm                                                                          |
| Film blow-up ratio: | 2:0                                                                              |
| Resin used:        | Low-density polyethylene made by Nippon Unicar Company Limited                    |

The density and melt index of the resin and the haze
and gloss of the resulting film are shown in Table 1
together with the results of other examples and
comparative examples.

### Comparative Example 1

A film was produced under the same
conditions as in Example 1, except that the air ring
was replaced by an air ring having a conventional
lip structure as shown in Fig. 2. The lip of this
air ring is of the parallel flow type which is said
to be suitable for blown film extrusion. Contrary
to expectation, the use of this air ring in the
arrangement of the present invention did not bring
about the improvement in film clarity, although
foreseeable degree of improvement was achieved as
compared with the conventional technology. As far
as gloss is concerned, no improvement was achieved
but the result was the same as that obtained in
Comparative Example 2.

### Comparative Example 2

A film was produced from the same resin as used in Example 1 on a conventional equipment without annealing chamber, cylinder, and baffle. An air ring of parallel flow type was used as in Comparative Example 1. The resulting film showed a haze value of 5.2 as shown in Table 1, which is mediocre for film grade low density polyethylene.

Examples 2 - 8

Using the same equipment and method as in Example 1, films were produced from several kinds of resins. Extrusion temperture was 170°C in Examples 5 and 6, 150°C in Example 7, and 160°C in other Examples. The description of grade numbers shown in Table 1 is as follows:

DFD-0118, NUC-8506 NUC-8008: Low density polyethylene made by Nippon Unicar Company LTD, Japan

NUC-3530: Ethylene-vinyl acetate copolymer made by Nippon Unicar Company LTD.

Ultzex 2020L: Ethylene copolymer made by Mitsui Petrochemical Co., Ltd, Japan

DFGA-7043, DFGA-7042: Ethylene copolymer made by Union Carbide Corporation.

Comparative Examples 3 - 9

Using the same equipment and method as in Comparative Example 2, films were produced from several kinds of resins. Extrusion temperature was 170°C in Comparative Examples 6 and 7, 150°C in Comparative Example 8, and 160°C in other Comparative Examples.

Comparative Example 10

A film was produced using the apparatus used in Example 1, with the annealing chamber removed. In this arrangement, the tubular film emerging the die is cooled immediately by the air

- 11 -

ring and passed through the cylinder and baffle. As compared with the conventional technique, this showed only a little improvement in general and no improvement at all in haze.

The results are indicated in Table 1.

TABLE 1

| | Resin Used | Density (g/ml) | Melt Index (g/10 min) | Haze % | Gloss (45°) |
|---|---|---|---|---|---|
| Example 1 | DFD-0118 | 0.923 | 2.4 | 2.7 | 78.0 |
| Comp. Ex. 1 | DFD-0118 | 0.924 | 2.4 | 3.7 | 65.0 |
| Comp. Ex. 2 | DFD-0118 | 0.924 | 2.4 | 5.6 | 63.0 |
| Example 2 | NUC-8506 | 0.923 | 0.8 | 2.5 | 80.0 |
| Comp. Ex. 3 | NUC-8506 | 0.923 | 0.8 | 5.3 | 66.8 |
| Example 3 | NUC-3530 | 0.927 | 0.5 | 3.3 | 69.0 |
| Comp. Ex. 4 | NUC-3530 | 0.927 | 0.5 | 6.5 | 62.0 |
| Example 4 | Ultzex 2020L | 0.919 | 2.0 | 4.2 | 65.3 |
| Comp. Ex. 5 | Ultzex 2020L | 0.919 | 2.0 | 8.3 | 59.0 |
| Example 5 | DFGA-7043 | 0.922 | 2.9 | 9.1 | 59.5 |
| Comp. Ex. 6 | DFGA-7043 | 0.922 | 2.9 | 15.1 | 45.0 |
| Example 6 | DFGA-7042 | 0.922 | 2.2 | 7.5 | 60.0 |
| Comp. Ex. 7 | DFGA-7042 | 0.922 | 2.2 | 14.2 | 56.0 |
| Example 7 | NUC-8008 | 0.916 | 5.0 | 9.5 | 51.0 |
| Comp. Ex. 8 | NUC-8008 | 0.916 | 5.0 | 18.0 | 30.0 |
| Example 8 | DFD-0118+ HDPE 5% | 0.924 | 2.4 | 3.6 | 74.0 |
| Comp. Ex. 9 | DFD-0118+ HDPE 5% | 0.924 | 2.4 | 8.0 | 61.0 |
| Comp. Ex.10 | DFD-0118 | 0.923 | 2.4 | 5.0 | 63.0 |

0077661

CLAIMS:

1. A process for forming a blown film by melt-extruding a thermoplastic resin and subsequently expanding and cooling the molten tubular film formed from the extrudate, which process comprises directing said molten tubular film into an annealing chamber wherein said molten tubular film is kept heated or cooled slowly, discharging said molten film from said annealing chamber and thereafter permitting said molten tubular film to expand while cooling it rapidly and uniformly by blowing cooling air perpendicularly to the axis of said tubular film from an air ring, continuing cooling such tubular film by passing secondary cooling air taken from the bottom of an air-flow rectifying cylinder, and finally cooling completely and solidifying said tubular film by permitting cooling air to discharge from an opening between the air-flow rectifying cylinder and an air baffle and from an opening between said tubular film and said air baffle.

2. A process as claimed in claim 1 wherein said thermoplastic resin is a low density polyethylene.

3. A process as claimed in claim 1 wherein said thermoplastic resin is an ethylene-vinyl acetate copolymer.

4. A process as claimed in any one of the preceding claims wherein said annealing chamber, said molten resin is maintained at a temperature higher than its solidification point.

5. An apparatus for forming a blown tubular film by extruding a thermoplastic resin from a circular die, cooling with air from an air ring, and expanding the extrudate with internal pressure, said apparatus comprising an annealing chamber installed between, and in contact with said die and said air ring and around said tubular film, and air ring for blowing cooling air perpendicularly to the axis of said tubular film, an air-flow rectifying cylinder installed coaxially with and outside said tubular film, and a baffle installed above said air-flow rectifying cylinder, said air ring and said cylinder forming between them an inlet for secondary cooling air, said cylinder and said baffle forming between them a secondary outlet for cooling air and said tubular film and said baffle forming between them an outlet for cooling air.

FIG. 1

0077661

FIG. 2

FIG. 1a

5

18

FIG. 2a

15